# EUROPEAN PATENT SPECIFICATION

(11) **EP 3 963 687 B1**
(45) Date of publication and mention of the grant of the patent: **14.10.2026**
(21) Application number: 20723575.5
(22) Date of filing: 29.04.2020
(51) Int. Cl.: H02J 7/00, B60L 53/35, B60L 53/37, B25J 18/00

(54) **CHARGING INFRASTRUCTURE WITH A HEXAPOD CHARGING STATION FOR A VEHICLE**
LADEINFRASTRUKTUR MIT EINER HEXAPODEN LADESTATION FÜR EIN FAHRZEUG
INFRASTURUCTURE DE CHARGE AVEC UNE STATION DE CHARGE POUR VEHICULES HEXAPODE

(30) Priority: 29.04.2019 NL 2023019
(43) Date of publication of application: 09.03.2022
(73) Proprietor: ROCSYS B.V., 2289 BA Rijswijk (NL)
(72) Inventor: VAN DER WEIJDE, Johannes Oosten, 2289 BA Rijswijk (NL)
(74) Representative: IP Maison
(86) International application number: PCT/NL2020/050266
(87) International publication number: WO 2020/222640

(56) References cited:
- WO-A1-2018/212167
- US-A1- 2013 076 902
- US-A1- 2019 016 218
- US-B1- 6 330 837
- US-B1- 9 592 742
- PRATT G A ET AL: "SERIES ELASTIC ACTUATORS", PROCEEDINGS OF THE 1995 IEEE/RSJ INTERNATIONAL CONFERENCE ON INTELLIGENT ROBOTS AND SYSTEMS. IROS 95. HUMAN ROBOT INTERACTION AND COOPERATIVE ROBOTS. PITTSBURGH, AUG. 5 - 9, 1995; [PROCEEDINGS OF THE IEEE/RSJ INTERNATIONAL CONFERENCE ON INTELLIGENT R, 5 August 1995 (1995-08-05), pages 399 - 406, XP000740920, ISBN: 978-0-7803-3006-1, DOI: 10.1109/IROS.1995.525827

## Description

The invention relates to a charging station for charging a vehicle, in particular an electrically powered vehicle, such as a passenger car.

Electrically powered vehicles have to be charged frequently by connecting them with a battery charger. In recent years, many attempts have been made to automate the establishment of the connection, for example by implementing a charging connector in the bottom or on the roof of the vehicle that can be engaged by electric contacts on a remote controlled arm.

The international patent application WO2018 212167 A1 describes a power supply device for connecting a power supply unit to a power receiving unit.

A disadvantage of the known solutions is that the applied specific charging connectors require a specific infrastructure that requires approval under local legislation, whereby it cannot be used by a wide variety of vehicles or countries.

It is an object of the present invention to provide a charging station in which a charging connection with a standardized vehicle-side charging interface can automatically be made.

According to a first aspect, the invention provides a charging infrastructure according to claim 1, comprising a charging station for charging a vehicle having a vehicle-side charging interface, wherein the charging station comprises a robot that carries a robot-side charging interface for establishing a charging connection with the vehicle-side charging interface, wherein the robot comprises a base frame, a moveable carrier carrying the robot-side charging interface, and at least three displacement assemblies between the base frame and the moveable carrier that form a mechanism to move the moveable carrier with at least three degrees of freedom with respect to the base frame, wherein the displacement assemblies comprise an actuator that is configured for imposing a displacement between the base frame and the moveable carrier over a displacement stroke or imposing a rotation of the moveable carrier with respect to the base frame over a displacement angle, wherein the robot comprises at least one compliance assembly in series with an actuator and the robot-side charging interface that is configured for resiliently absorbing or releasing a displacement between the actuator and the robot-side charging interface over a compliance stroke or for resiliently absorbing or releasing a rotation of the moveable carrier with respect to the base frame over a displacement angle, wherein the length of the compliance stroke is at least 5 millimetre, or wherein the angle of the compliance rotation is at least 1 degree, that is +/- 0,5 degrees.

The charging infrastructure according to the invention comprises a charging station with a robot having a mechanism formed by the displacement assemblies to move the robot charging interface to the vehicle-side charging interface in at least three degrees of freedom. The one or more compliance assemblies allow absorbance of a portion of a displacement stroke of the actuators. This enables the movement of the robot-side charging interface in a controlled way but with compliance, which facilitates a proper engagement of the charging interfaces even when they are not properly aligned. This allows the charging interfaces to be implemented as existing, legally approved connectors.

In an embodiment the robot comprises six displacement assemblies that form a hexapod mechanism between the base frame and the moveable carrier to move the moveable carrier with six degrees of freedom.

In an embodiment each displacement assembly comprises a compliance assembly in series with an actuator, whereby compliance can be provided in the same degrees of freedom as provided by the actuators.

The robot comprises a compliance assembly between the robot-side charging interface and the moveable carrier.

In an embodiment the charging station comprises multiple compliance assemblies in series with an actuator and the robot-side charging interface, wherein these compliance assemblies have mutually different mechanical impedances that resiliently absorbs or releases a displacement between the actuator and the robot-side charging interface. A mechanical impedance is for example a spring stiffness. The different mechanical impedances can for example be used to compensate uneven weight distribution following from the different individual weights of the various components present in the robot.

In an embodiment the displacement assemblies are at one side connected with the base frame via a first coupling and wherein the displacement assemblies are at an opposite side connected with the moveable carrier via a second coupling, wherein the actuator is a rectilinear motion actuator in series with the compliance assembly. These displacement assemblies may form elongate legs between the base frame and the moveable carrier.

In an embodiment thereof the first coupling and/or the second coupling is a universal joint.

In an embodiment the length of the compliance stroke is at least 1% of the displacement stroke.

In an embodiment the length of the compliance stroke is at least 5% of the displacement stroke.

In an embodiment the length of the compliance stroke is at least 10% of the displacement stroke.

In an embodiment the length of the compliance stroke is maximal 50% of the displacement stroke.

In an embodiment the length of the compliance stroke is maximal 100% of the displacement stroke.

The compliance assembly is biased to a defined position between the actuator and the robot-side charging interface.

The compliance assembly is configured for resiliently absorbing the displacement over the compliance stroke after exceeding a threshold load between the actuator and the robot-side charging interface. These features allows the determination of the distance between the base frame and the moveable carrier from the position of the actuator in each displacement assembly. From this the spatial position of the robot-side charging interface can be determined.

In an embodiment the robot-side charging interface and the vehicle-side charging interface are provided with a locking provision to lock and unlock the established charging connection as a safety provision.

In an embodiment the charging station comprises different types of robot-side charging interfaces for establishing a charging connection with different types of vehicle-side charging interfaces, whereby different vehicles with different vehicle-side charging interfaces can be charged in the same station.

In an embodiment the charging station comprises an electronic control system for controlling the operation of the charging station.

In an embodiment the electronic control system comprises an electronic controller that is connected with the actuators, wherein the electronic controller is configured for controlling the displacements by the actuators.

In an embodiment thereof the electronic control system comprises a first sensor that is connected with the electronic controller for determining the position or movement of an actuator.

In an embodiment thereof the first sensor is attached to the actuator.

In an embodiment the electronic control system comprises an imaging detector that is connected with the electronic controller, wherein the electronic controller is configured for determining the spatial position of the vehicle-side charging interface in the charging station and for controlling the displacements by the actuators accordingly to move the robot-side charging interface towards the vehicle-side charging interface for establishing the charging connection.

In an embodiment the electronic controller is configured for detecting a compliance stroke of a compliance assembly and for controlling the displacements by the actuators in response to the detection of the compliance stroke. By this control feature the actuators can for example be activated to push the robot-side charging interface with a temporarily higher force against the vehicle-side charging interface to establish the correct charging connection.

In an embodiment the electronic controller is configured for determining a collision of the robot-side charging interface based on a displacement stroke and a compliance stroke. This may be a collision with a human, wherein the electronic control system may respond by retracting all actuators.

In an embodiment the electronic controller is configured for determining physical contact between the robot-side charging interface and the vehicle-side charging interface based on a displacement stroke and a compliance stroke.

In an embodiment the electronic controller is configured for determining a misalignment between the robot-side charging interface and the vehicle-side charging interface based on a displacement stroke and a compliance stroke.

In an embodiment the electronic controller is configured for controlling the displacements by the actuators in order to at least partly correct the misalignment between the robot-side charging interface and the vehicle-side charging interface. In an embodiment the electronic control system comprises a second sensor that is connected with the electronic controller for determining a compliance stroke or for determining a force or load acting on a compliance assembly.

In an embodiment the second sensor is attached to the compliance assembly.

In an embodiment the electronic control system comprises a third sensor between the moveable carrier and the robot-side charging interface that is connected with the electronic controller for determining a force or load acting between the robot-side charging interface and the moveable carrier.

In an embodiment the charging infrastructure comprises a computer server remote from the charging station that is connected with the electronic control system for configuration or remote control of the electronic controller.

According to a second aspect, the invention provides a method according to claim 14 for charging a vehicle having a vehicle-side charging interface in a charging station of a charging infrastructure, wherein the charging station comprises a robot that carries a robot-side charging interface for establishing a charging connection with the vehicle-side charging interface, wherein the robot comprises a base frame, a moveable carrier carrying the robot-side charging interface, and at least three displacement assemblies between the base frame and the moveable carrier that form a mechanism to move the moveable carrier with at least three degrees of freedom with respect to the base frame, wherein the displacement assemblies comprise an actuator that is configured for imposing a displacement between the base frame and the moveable carrier over a displacement stroke, wherein the robot comprises at least one compliance assembly in series with an actuator and the robot-side charging interface that is configured for resiliently absorbing or releasing a displacement between the actuator and the robot-side charging interface over a compliance stroke, wherein in the method one or more of the linear actuators impose a displacement between the base frame and the moveable carrier over a displacement stroke to move the robot-side charging interface towards the vehicle-side charging interface, and wherein one or more of the compliance assemblies resiliently absorb or release a displacement between the actuator and the robot-side charging interface over a compliance stroke.

In an embodiment the length of the compliance stroke is at least 1 millimeter.

In an embodiment the length of the compliance stroke is maximal 100% of the displacement stroke.

The compliance assembly is configured for resiliently absorbing the displacement over the compliance stroke after exceeding a threshold load between the actuator and the robot-side charging interface, wherein in the method the moveable carrier follows the displacements as imposed by actuators until exceeding a threshold load whereby a compliance stroke is made.

In an embodiment the charging station comprises an electronic control system for controlling the operation of the charging station, wherein the electronic control system comprises an electronic controller that is connected with the actuators, wherein in the method the electronic controller controls the displacements by the actuators.

In an embodiment the electronic control system comprises an imaging detector that is connected with the electronic controller, wherein in the method the electronic controller determines the spatial position of the vehicle-side charging interface in the charging station by means of the image detector and the electronic controller controls the displacements by the linear actuators accordingly to move the robot-side charging interface towards the vehicle-side charging interface for establishing the charging connection.

In an embodiment the electronic controller detects a compliance stroke of a compliance assembly and controls the displacements by the linear actuators in response to the detection of the compliance stroke.

In an embodiment the electronic controller determines a collision of the robot-side charging interface based on a displacement stroke and a compliance stroke.

In an embodiment the electronic controller determines physical contact between the robot-side charging interface and the vehicle side charging interface based on a displacement stroke and a compliance stroke.

In an embodiment the electronic controller determines a misalignment between the robot-side charging interface and the vehicle-side charging interface based on a displacement stroke and a compliance stroke.

In an embodiment the electronic controller controls the displacement by the linear actuators in order to at least partly correct the misalignment between the robot-side charging interface and the vehicle-side charging interface.

The various aspects and features described and shown in the specification can be applied, individually, wherever possible. These individual aspects, in particular the aspects and features described in the attached dependent claims, can be made subject of divisional patent applications.

The invention will be elucidated on the basis of an exemplary embodiment shown in the attached drawings, in which:
Figure 1 is an isometric side view of a charging station with a robot according to an embodiment of the invention having a robot-side charging interface that has established a charging connection with a vehicle-side charging interface of an electrically powered vehicle;
Figures 2A and 2B are an isometric side view and a detail of the charging station of figure 1, wherein the robot is in its position just before establishing the charging connection;
Figure 3 is an isometric front view of the robot as shown in figures 1, 2A and 2B;
Figure 4 is a cross section of the robot at one of its legs;
Figure 5A is a partial cross section of the robot-side charging interface and the vehicle-side charging interface that are properly aligned just before establishing the charging connection;
Figure 5B is a partial cross section of the robot-side charging interface and the vehicle-side charging interface that have properly established the charging connection;
Figures 5C and 5D are partial cross sections of the robot-side charging interface and the vehicle-side charging interface during correction of an allowable misalignment under control of the robot; and
Figure 6 shows a scheme of an operation.

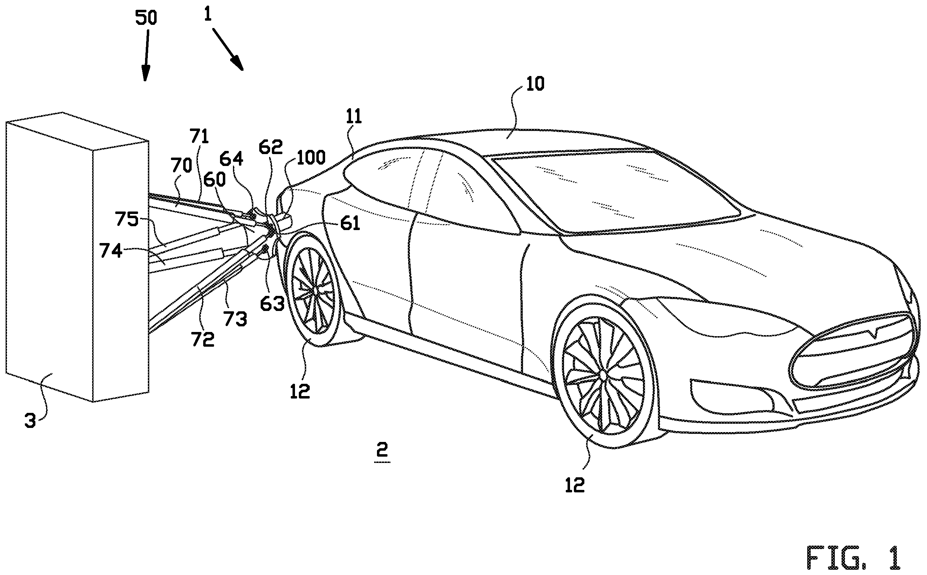

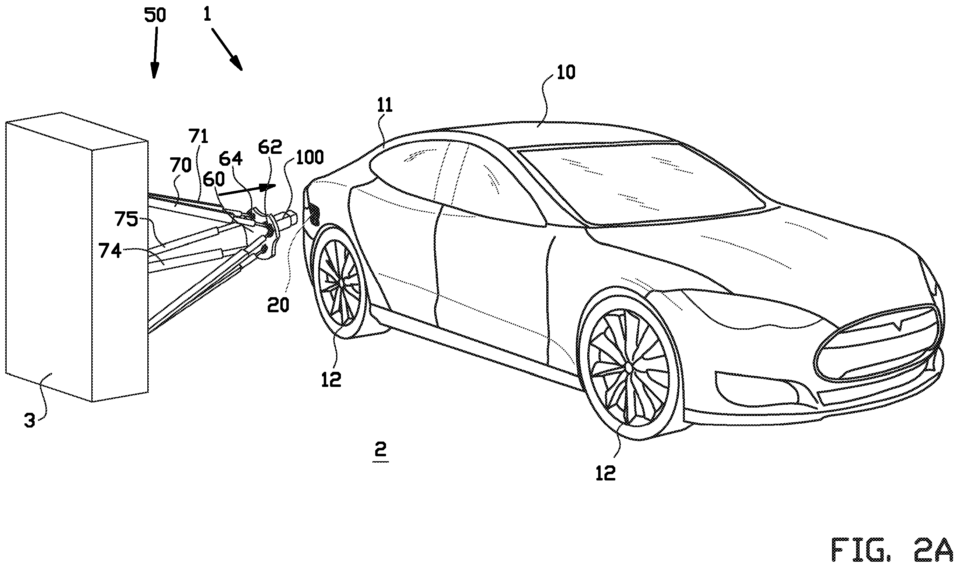

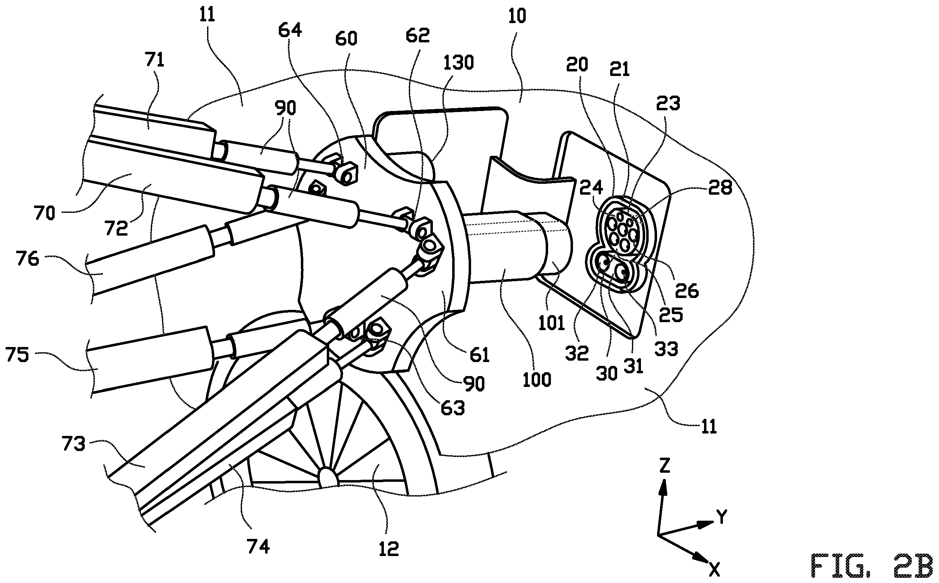

Figures 1, 2A and 2B show a charging station 1 with a vehicle area 2 for electrically charging an electrically powered vehicle 10, in this example a passenger car. The vehicle 10 may be fully electrically powered or it may have a hybrid drive in which an electric drive is combined with fuel combustion. The vehicle 10 has a vehicle body 11 on wheels 12 and a vehicle-side charging interface 20 carried by the vehicle body 11, in this example on the right side of the vehicle body 11 above one of the rear wheels 12.

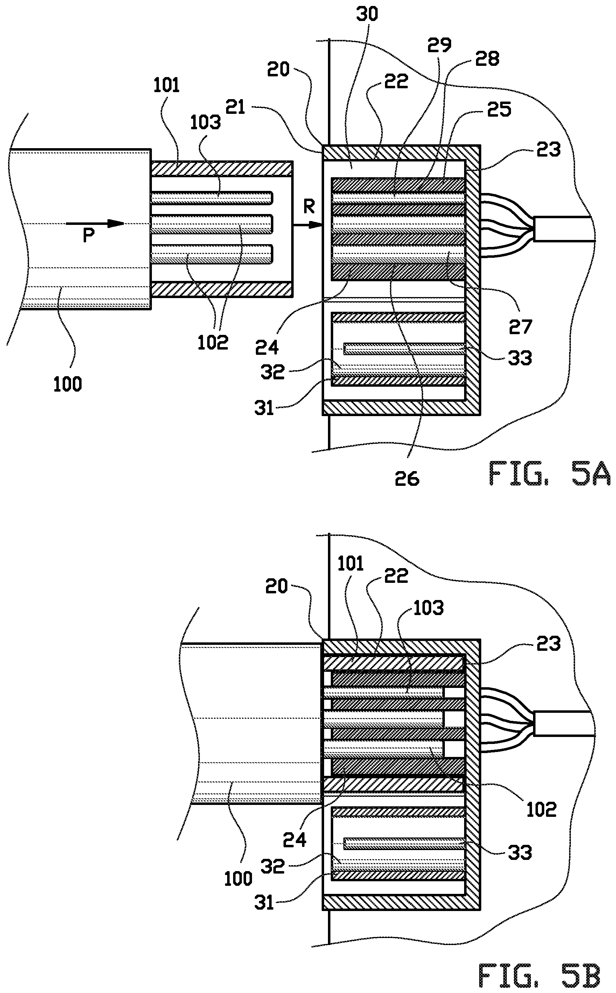

The specific pinout of the vehicle-side charging interface 20 may be of any known type, such as the so called Mennekes, Yazaki, Schuko or Combo type. As shown in figures 2B and 5A, the vehicle-side charging interface 20 is in this example a Combo CCS-2 inlet that accepts both normal charging and high speed charging. The vehicle-side charging interface 20 comprises a front surface 21 that merges inwardly into a circumferential inner surface 22. The inner surface 22 merges into a bottom surface 23 from which a first socket 24 and a second socket 31 project. The first socket 24 comprises a socket body 25 of electrically isolating material having five first channels 26 in which five recessed normal charging connectors 27 extend, and two second channels 28 in which in two control connectors 29 extend. The second socket 31 comprises a socket body 31 of electrically insulating material having two third channels 32 in which two high speed charging connectors 33 extend. The inner surface 21 and the socket bodies 26 together define a slot 30 around the sockets 24, 31. The slot 30, the first channels 26, the second channels 28 and the third channels 32 have a receiving direction R parallel to the first channels 26, the second channels 28 and the third channels 32.

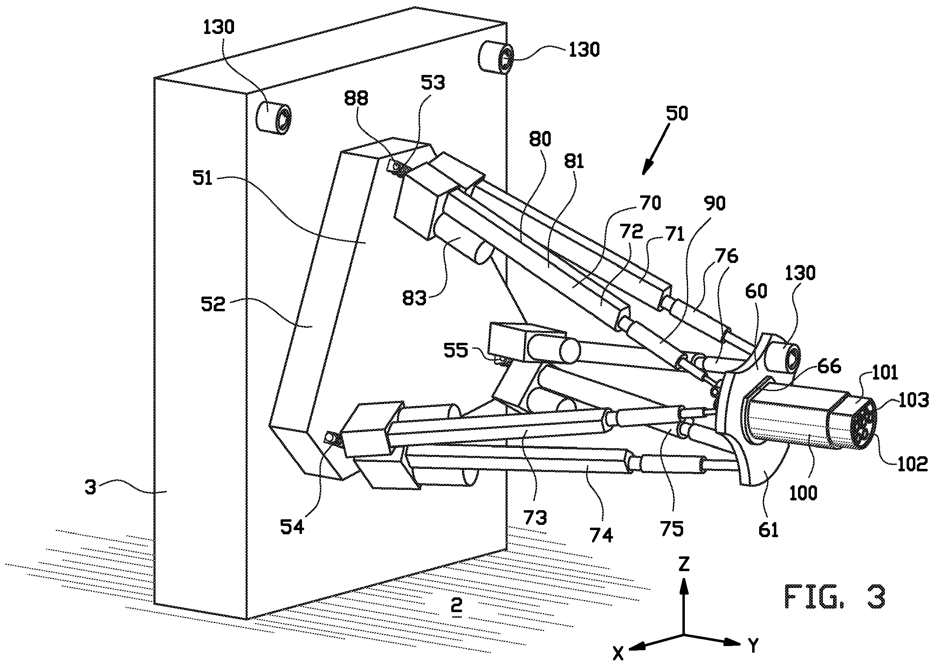

As shown in figure 3, the charging station 1 comprises a robot 50 having a robot-side charging interface 100 for establishing a charging connection with the vehicle-side charging interface 20. The robot-side charging interface 100 is electrically connected with a not shown battery charger. The robot 50 comprises a schematically illustrated main base 51 that is in this example supported by a console 3 aside the vehicle area 2 at the side close to the vehicle-side charging interface 20. The robot 50 can be positioned at any side, or at the front side or at the back side of the vehicle 10 depending on the location of the vehicle-side charging interface 20. Alternatively the robot 50 is positioned on or under the floor to reach a vehicle-side charging interface 20 at the bottom side of the vehicle 10, or the robot 50 is suspended above the vehicle 10 to reach a vehicle-side charging interface 20 at the top side or on the roof of the vehicle 10.

The main base 51 comprises a main frame 52 and two first leg supports 53, two second leg supports 54 and two third leg support 55 on the main frame 52 that are in a same plane and that form pairs in a triangular configuration.

As best shown in figures 2B and 3, the robot 50 comprises a moveable carrier 60 having a carrier frame 61 and two first leg supports 62, two second leg supports 63 and two third leg supports 64 on the carrier frame 61 that are in a same plane and that form pairs in a triangular configuration, wherein the distances between the pairs are smaller than the distances between the pairs of leg supports 53-55 of the main base 51. The carrier 60 carries the robot-side charging interface 100.

As shown in figures 2B, 3 and 5A, the robot-side charging interface 100 is in this example of the so called Mennekes type (type 2 connector under IEC 62196) for normal charging. The robot-side charging interface comprises a shield 101 that mates with and fits inside the slot 30 of the vehicle-side charging interface 20, and multiple first bushes 102 and second bushes 103 that mate with and fit inside the respective first channels 26 and second channels 28 of the vehicle-side charging interface 20. The robot-side charging interface 100 comprises charging connectors that are recessed inside the bushes 102, 103 and that electrically connect with the connectors 27, 29 of the vehicle-side charging interface 20. The shield 101, the first bushes 102 and the second bushes 103 have an insert direction P parallel therewith. The insert direction P is by default perfectly parallel to and aligned with the receiving direction R of the vehicle-side charging interface 20.

The vehicle-side charging interface 20 and the robot-side charging interface 100 typically have a very precisely fitting geometry that allow at the initial mutual contact only a slight misalignment transverse to the receiving direction R of about maximal 3 millimeters, or a slight misalignment of maximal 10 degrees when manually plugged into each other. Due to the self-searching shape features of the charging interfaces 20, 100 such misalignments are automatically corrected, whereby the charging interface 20, 100 come into proper mutual engagement. The connectors 27, 29, 33 of the vehicle-side charging interfaces 20 and the connectors of the robot-side charging interface may have different lengths or positions in the insert direction P and receiving direction R to impose a default contact sequence between the mating connectors, even when they are misaligned. This ensures for example that a ground connection or a control connection is established before the power connections are made.

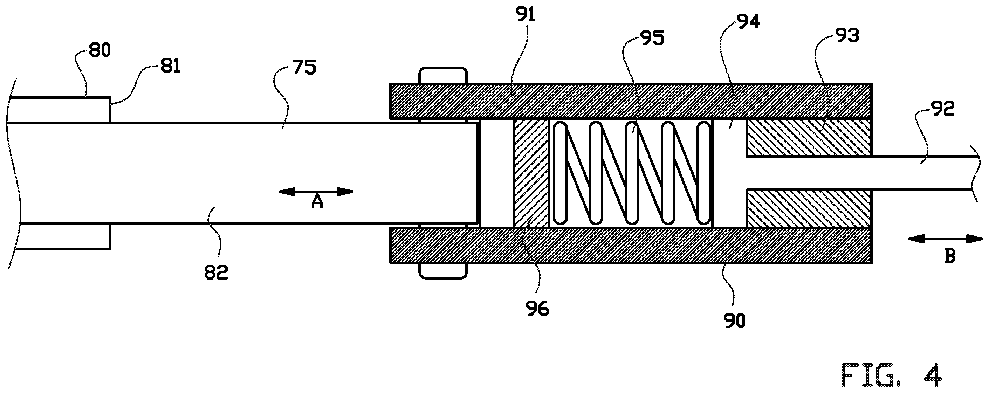

The robot 50 comprises in this example in total six displacement assemblies between the main base 51 and the moveable carrier 60 that are embodied as six legs 71-76 that extend between the leg supports 53-55 of the main base 51 and the leg supports 62-64 of the moveable carrier 60 to form a hexapod mechanism 70 between the main base 51 and the moveable carrier 60. The legs 71-76 are identical in construction and are hereafter described in detail by referring to the second leg 72. Details thereof are also shown in figure 4.

The second leg 72 comprises a rectilinear motion actuator 80 having an outer tube 81 that is at its bottom end connected to its leg support 53-55 of the main base 51 via a first coupling 88 that is embodied as a universal joint. The rectilinear motion actuator 80 has in this example an electric motor 83 that is mounted to the outer tube 81. The rectilinear motion actuator 80 has a drive rod 82 that is rectilinearly guided inside the outer tube 81 and that partly projects from the outer tube 81. The drive rod 82 is operatively connected with the electric motor 83, for example via a spindle. The drive rod 82 is thereby reciprocally rectilinearly moveable in direction A with respect to the first coupling 88 over a displacement stroke by powering the electric motor 83 accordingly. The rectilinear motion actuator 80 has an internal first sensor to measure the position of the drive rod 82 with respect to the outer tube 81, such as a revolution sensor or a revolution counter on the spindle. Thereby each leg 71-76 has such first sensor.

The second leg 72 comprises a compliance assembly 90 in series with the rectilinear motion actuator 80. The compliance assembly 90 comprises in this example an outer tube 91 that is mounted to the end of the drive rod 82 of the rectilinear motion actuator 80, and a connecting rod 92 that is rectilinearly guided inside the outer tube 91, in this example by means of a slide bearing 93. The connecting rod 92 partly projects from the outer tube 91 and the compliance assembly 90 comprises an end stop 94 at the end of the connecting rod 92 that remains behind the slide bearing 93 to determine a defined outermost position of the connecting rod 92 with respect to the drive rod 82, and a reversible flexible element, in this example a spring, in particular a coil spring 95 between the end stop 94 and the drive rod 82 that is biased to keep the end stop 94 in abutment with the slide bearing 93. By means of the coil spring 95 the connecting rod 92 can resiliently slide back in direction B towards the drive rod 82 over a compliance stroke when a defined threshold force is exceeded that overcomes the bias. The connecting rod 92 is at its distal end connected to its leg support 61-63 of the moveable carrier 60 via a second coupling 89 that is embodied as a universal joint.

The length of the compliance stroke is minimal 1 millimeter and maximal 100 % of the maximum length of the displacement stroke of the drive rod 82.

The compliance assembly 90 is biased to and against the end stop 94. Alternatively, the coil spring 95 or any other resilient element provides resilience in opposite directions with or without implementing a threshold force whereby the connecting rod 92 can resiliently be pushed towards and pulled away from the drive rod 82. The coil springs 95 in the individual legs 71-76 may have different impedances, in this example different stiffness to ensure a default position of the robot-side charging interface 100 without hanging down due to for example an uneven weight distribution following from the different individual weights of the various components present in the robot 50.

The six legs 71-76 form in this example a hexapod mechanism 70 between the main base 51 and the moveable carrier 60. Alternatively formulated the six legs 71-76 form a Stewart-platform. The rectilinear motion actuators 80 impose displacements between the first couplings 88 and second couplings 89 which are directly followed by the moveable carrier 60 as long as the threshold forces on the compliance assemblies 90 are not exceeded. The moveable carrier 60 can thereby make translations in the three orthogonal directions X, Y, Z (lateral, longitudinal and vertical) and make rotations around these axes (pitch, roll, yaw), in total six degrees of freedom (6-DOF). A part of the imposed displacements between the first couplings 88 and the second couplings 89 can be reversibly absorbed by the compliance assemblies 90 when the threshold force is exceeded.

The compliance assembly 90 has an internal second sensor 96 to measure the position of the connecting rod 92 with respect to the drive rod 82, such as a distance sensor, or a pressure sensor or force sensor to measure the pressure force that the connecting rod 92 exerts onto the drive rod 82. Thereby each leg 71-76 has such second sensor 96 whereby compliance data can be obtained that is related to the compliance between the moveable carrier 60 and the drive rods 75 at the actual position of the moveable carrier 60 as obtained with the first sensors. This compliance comprises translations in the three orthogonal directions X, Y, Z (lateral, longitudinal and vertical) and rotations around these axes (pitch, roll, yaw), in total six degrees of freedom (6-DOF). Alternatively or in addition thereto, the moveable carrier 60 comprises a third sensor 66 between the carrier frame 61 and the robot-side charging interface 100, such as a pressure sensor matrix, to obtain or derive abovementioned compliance data in the six degrees of freedom.

The charging station 1 comprises an electronic control system for controlling the operation of the charging station 1. The control system comprises one or more imaging detectors 130, such as a video camera or multiple cameras to form a stereo camera, or distance sensors such as a LIDAR, radar or led based sensors to detect the position of the vehicle-side charging interface 20 of the vehicle in the charging station 1. The imaging detectors 130 form therefore part of a vision system. The imaging detectors 130 may be base-mounted, such as on the console 3 as shown, or be carried by the robot 50, such as on the carrier frame 61 as shown. The control system comprises an electronic controller that is connected with the electric motors 83 to power their rotation. The electronic controller is connected with the detectors 130, and with the first sensors of the linear actuators 80 and the second sensors 96 of the compliance assemblies 90 and/or with the third sensor 66 between the carrier frame 61 and the robot-side charging interface 100.

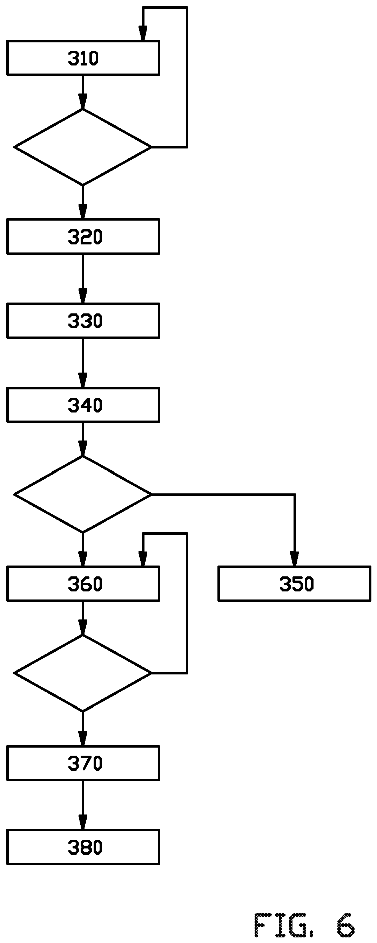

The charging station forms part of a charging infrastructure having a remote computer server for communication with and for configuration of the electronic controller. The electronic controller is loaded with software that is executed by a processor of the electronic controller, whereby the charging station 1 performs the following operation as schematically indicated in figure 6. The explanation starts with fully retracted drive rods 82 of the legs 71-76 whereby the robot-side charging interface 100 is withdrawn from the vehicle area 2 in a standby position to allow the vehicle 10 to enter the charging station 1.

In a first step 310 the presence of a particular vehicle 10 at the vehicle area 2 is notified by means of the imaging detectors 130, or by any other appropriate sensor, or by any type of data communication between the vehicle 10 and the charging station 1, or by any type of remote trigger system, or by registration by the driver of the vehicle 10, or by a human operator on site at the charging station 1.

When the presence of the vehicle 10 is notified, then in a second step 320 the spatial position and orientation of the vehicle-side charging interface 20 in the charging station 1 are determined by means of the imaging sensors 130. This comprises the position in the three orthogonal directions X, Y, Z and any rotational orientation around these axes.

In a third step 330, the corresponding particular initial spatial position and orientation of the robot-side charging interface 100 are determined in which the robot-side charging interface 100 can be correctly inserted in direction R into the vehicle-side charging interface 20 as shown in figure 5A.

In a fourth step 340, the electric motors 83 are individually powered while controlling the individual positions of the drive rods 82 in direction A with the first sensors to bring the robot-side charging interface 100 in the particular initial spatial position and orientation. In this fourth step 340 the individual positions of the connecting rods 92 with respect to the drive rods 82 or any forces acting between the connecting rod 92 and the drive rod 82 are monitored by means of the second sensors 96. Alternatively or in addition thereto this can be determined with the third sensor 66. The movements are monitored with the vision system as formed with the imaging detectors 130. When any one of the connecting rods 92 is displaced towards the driving rod 75 of the same leg 71-76, it is assumed that an unexpected physical contact has occurred, for example a collision with a foreign object, such as a human, a vehicle or any other surrounding. Then in a fifth step 350 the electric motors 83 are stopped or reversed to retract the robot-side charging interface 100.

When no collision has occurred, then in a sixth step 360 following the fourth step 340, the electric motors 83 are powered while controlling the positions of the drive rods 82 in direction A with the first sensors to push the robot-side charging interface 100 into the vehicle-side charging interface 20. In the sixth step 360 the positions of the connecting rods 92 with respect to the drive rods 75 are monitored by means of the second sensors 96 or determined by means of the third sensor 66 to execute three functions:
The first function is the determination of the proper final engagement position of the robot-side charging interface 100 with respect to the vehicle-side charging interface 20 as shown in figure 5B. The final engagement is obtained by exercising a pushing force in the insert direction P. This pushing force is transferred from the main base 51 to the movable carrier 60 via the biased coil springs 95. The coil springs 95 may be pushed in when their defined threshold force is exceeded, which is monitored by means of the second sensors 96 or the third sensor 66. In the first function this compliance in the legs 71-76 is at least partly compensated by accordingly powering the electric motors 83 in order to be able to reach the proper final engagement position of the robot-side charging interface 100 with respect to the vehicle-side charging interface 20. The proper final engagement may be confirmed by the battery charger that is connected to the robot-side charging interface 100.

The second function is the determination of an unexpected physical contact between the robot-side charging interface 100 and the vehicle-side charging interface 20.

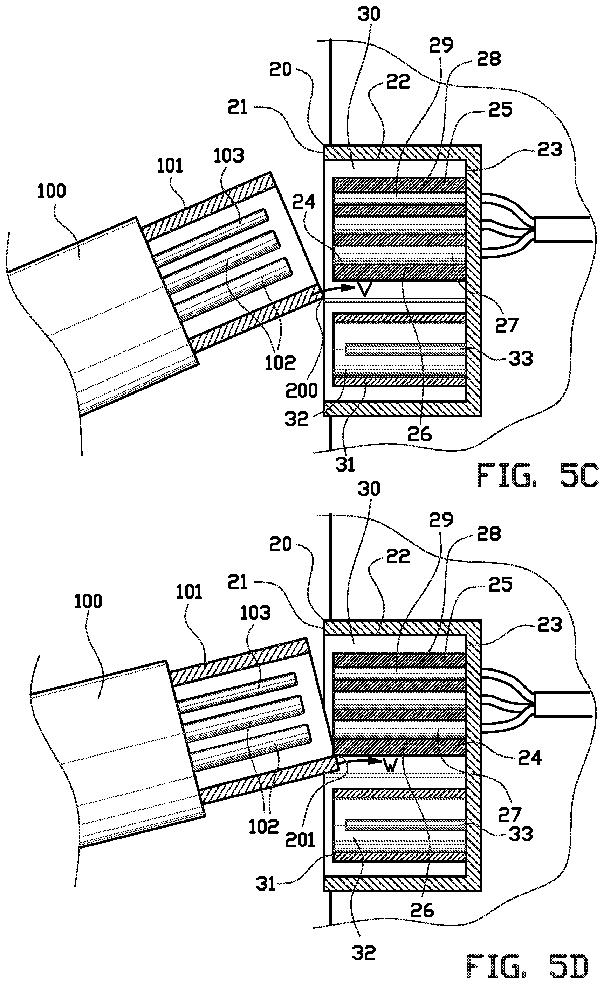

The third function is the determination of an acceptable misalignment of the robot-side charging interface 100 with respect to the vehicle-side charging interface 20, such as for example shown in figure 5C, due to an expected or unexpected first physical contact 200. This first physical contact 200 forces the robot-side charging interface 100 to tilt or slide with respect to the vehicle-side charging interface 20 while a pushing force is transferred from the main base 51 to the movable carrier 60 via the biased coil springs 95. The coil springs 95 may be pushed in when their defined threshold force is exceeded, which is monitored by means of the second sensors 96 or the third sensor 66. The compliance as provided by the individual coil springs 95 may induce a sliding movement of the robot-side charging interface 100 in direction V along the vehicle-side charging interface 20 by their self-searching shape features, and/or a corrective activation of the electric motors 83 is determined based on the signals of the second sensors 96 or third sensor 66. In figure 5C the illustrated misalignment contains a translation and a rotation in the same plane. It will be clear that any misalignment in all six degrees of freedom can occur, can be detected and corrected by corresponding corrective actions of the electric motors 83. This is repeated until the proper final engagement position of the robot-side charging interface 100 with respect to the vehicle-side charging interface 20 is reached. In this iteration a further physical contact 201 as shown in figure 5D may be detected and corrected by inducing a sliding movement in direction W. The electronic control system may monitor the electrical connections with the connectors of the robot-side charging interface, for example via the battery charger, to determine a misalignment, for example by determining a contact sequence or by detecting any deviations from the default contact sequence.

In an seventh step 370, the engaged robot-side charging interface 100 and vehicle-side charging interface 20 are locked to prevent disengagement, and the vehicle 2 is charged via the properly engaged charging interfaces 20, 100.

After charging, the charging interfaces 20, 100 are unlocked and robot-side charging interface 100 is disengaged from the vehicle-side charging interface 20 in an eighth step 380 by retracting the drive rods 82 of the legs 71-76. The drive rods 82 are fully retracted to retract the robot-side charging interface 100 to said standby position.

The specific compliance as provided by the parallel compliance assemblies 90 has the following advantages:
Firstly, the compliance enables safe detection of any expected or unexpected physical contact, for example a collision with a human, when the robot-side charging interface 100 is moved into its initial spatial position with respect to the vehicle-side charging interface 20. The compliance provides softness or flexibility when hitting the robot-side charging interface 100.

Secondly, the compliance allows the detection of any misalignment between the robot-side charging interface 100 and the vehicle-side charging interface 20 after the initial spatial position and orientation have been reached. The misalignment is derived from the detected physical contact. The compliance facilitates to rapidly obtain the proper final engagement position using the self-searching shape features of the robot-side charging interface 100 and vehicle-side interface 20. The compliance makes the physical contact itself safer as damaging peak forces are prevented by the provided resilience or compliance.

Thirdly, the compliance facilitates the disengagement of the robot-side charging interface 100 from the vehicle-side charging interface 20, in particular when the position of the vehicle 10 has changed during the charging process.

Fourthly, the compliance absorbs any rigid motion as imposed by the rectilinear motion actuators 80 or by small movements of the vehicle 10. These small movements may be caused for example by passengers that step in or out of the vehicle 2, or by wind acting against the vehicle 2.

The compliance assemblies 90 therefore provide tactile feedback in the six degrees of freedom of movement of the moveable carrier 60 and therefore from the vehicle-side charging interface 100. This tactile feedback is derived from the third sensor 66 or the second sensor 96 and it is used by the electronic controller in controlling the rectilinear movement actuators 80. The vision system provides visual feedback.

It is to be understood that the above description is included to illustrate the operation of the preferred embodiments and is not meant to limit the scope of the invention.

## Claims

1. Charging infrastructure comprising
- a charging station for charging a vehicle having a vehicle-side charging interface, wherein the charging station comprises
- a robot that carries a robot-side charging interface for establishing a charging connection with the vehicle-side charging interface, wherein the robot comprises
- a base frame,
- a moveable carrier carrying the robot-side charging interface, **characterized by**
- at least three displacement assemblies between the base frame and the moveable carrier that form a mechanism to move the moveable carrier with at least three degrees of freedom with respect to the base frame, wherein
- the displacement assemblies comprise an actuator that is configured for imposing a displacement between the base frame and the moveable carrier over a displacement stroke or imposing a rotation of the moveable carrier with respect to the base frame over a displacement angle, and wherein the robot comprises
- at least one compliance assembly in series with the actuator and the robot-side charging interface for facilitating the disengagement of the robot-side charging interface from the vehicle-side charging interface, when the position of the vehicle has changed during the charging process, which compliance is
- configured for resiliently absorbing or releasing a displacement between the actuator and the robot-side charging interface over a compliance stroke and for resiliently absorbing or releasing a rotation of the moveable carrier with respect to the base frame over a displacement angle, wherein the length of the compliance stroke is at least 5 millimeter, or wherein the angle of the compliance rotation is at least 1 degree
- wherein the compliance assembly is configured for resiliently absorbing the displacement over the compliance stroke after exceeding a threshold load between the actuator and the robot-side charging interface;
- and wherein the compliance assembly is biased to a defined position between the actuator and the robot-side charging interface

2. Charging infrastructure according to claim 1, further comprising an electronic control system for controlling the operation of the charging station, wherein the electronic control system comprises an electronic controller configured for detecting the compliance stroke of the compliance assembly and for controlling the displacements by the actuators in response to the detection of the compliance stroke.

3. Charging infrastructure according to any one of the preceding claims, wherein the robot comprises six displacement assemblies that form a hexapod mechanism between the base frame and the moveable carrier to move the moveable carrier with six degrees of freedom.

4. Charging infrastructure according to any one of the preceding claims, wherein each displacement assembly comprises a compliance assembly in series with an actuator between the robot-side charging interface and the moveable carrier.

5. Charging infrastructure according to any one of the preceding claims, wherein the charging station comprises multiple compliance assemblies in series with an actuator and the robot-side charging interface, wherein these compliance assemblies have mutually different mechanical impedances to resiliently absorbs or releases a displacement between the actuator and the robot-side charging interface.

6. Charging infrastructure according to any one of the preceding claims, wherein the displacement assemblies are at one side connected with the base frame via a first coupling and wherein the displacement assemblies are at an opposite side connected with the moveable carrier via a second coupling, wherein the actuator is a rectilinear motion actuator in series with the compliance assembly.

7. Charging infrastructure according to claim 6, wherein the first coupling and/or the second coupling is a universal joint.

8. Charging infrastructure according to any one of the preceding claims, wherein the length of the compliance stroke is at least 50% of the displacement stroke.

9. Charging infrastructure according to any one of the preceding claims, wherein the robot-side charging interface and the vehicle-side charging interface are provided with a locking provision to lock and unlock the established charging connection.

10. Charging infrastructure according to claim 1, wherein the charging station comprises an electronic control system for controlling the operation of the charging station, wherein the electronic control system comprises an electronic controller that is connected with the actuators, wherein the electronic controller is configured for controlling the-displacements by the actuators, wherein the electronic control system comprises a sensor that is connected with the electronic controller for determining the position or movement of an actuator, and/or a sensor that is connected with the electronic controller for determining the compliance stroke or for determining a force or load acting on the compliance assembly, and/or a sensor between the moveable carrier and the robot-side charging interface that is connected with the electronic controller for determining a force or load acting between the robot-side charging interface and the moveable carrier.

11. Charging infrastructure according to claim 10, wherein the electronic controller is configured for determining physical contact between the robot-side charging interface and the vehicle-side charging interface based on a displacement stroke and the compliance stroke, and/or wherein the electronic controller is configured for determining a misalignment between the robot-side charging interface and the vehicle-side charging interface based on a displacement stroke and the compliance stroke, and/or wherein the electronic controller is configured for controlling the displacements by the actuators in order to at least partly correct the misalignment between the robot-side charging interface and the vehicle-side charging interface.

12. Charging infrastructure according to any one of claims 2, 10 or 11 wherein the electronic control system comprises an imaging detector that is connected with the electronic controller, wherein the electronic controller is configured for determining the spatial position of the vehicle-side charging interface in the charging station and for controlling the displacements by the actuators accordingly to move the robot- side charging interface towards the vehicle-side charging interface for establishing the charging connection, and/or, wherein the electronic controller is configured for determining the spatial position of the robot-side charging interface in the charging station and for controlling the displacements by the actuators accordingly to move the robot-side charging interface towards the vehicle-side charging interface for establishing the charging connection.

13. Charging infrastructure according to any one of claims 2 and 10-12, comprising a computer server remote from the charging station that is connected with the electronic control system for configuration or remote control of the electronic controller.

14. Method for charging a vehicle having a vehicle-side charging interface in a charging station of a charging infrastructure, comprising the use of a charging infrastructure according to any of the preceding claims.

## Patentansprüche

1. Ladeinfrastruktur mit
- Einer Ladestation zum Laden eines Fahrzeugs mit einer fahrzeugseitigen Ladeschnittstelle, wobei die Ladestation aufweist
- einen Roboter, der eine roboterseitige Ladeschnittstelle zum Herstellen einer Ladeverbindung mit der fahrzeugseitigen Ladeschnittstelle trägt, wobei der Roboter aufweist
- einen Grundrahmen,
- einen beweglichen Träger, der die roboterseitige Ladeschnittstelle trägt, **gekennzeichnet durch**
- zumindest drei Verschiebe-Baueinheiten zwischen dem Grundrahmen und dem beweglichen Träger, die einen Mechanismus ausbilden, um den beweglichen Träger mit zumindest drei Freiheitsgraden bezüglich des Grundrahmens zu bewegen, wobei
- die Verschiebe-Baueinheiten einen Aktuator aufweisen, der ausgebildet ist, zwischen dem Grundrahmen und dem beweglichen Träger eine Verschiebung über einen Verschiebungshub aufzuerlegen oder eine Drehung des beweglichen Trägers bezüglich des Grundrahmens über einen Verschiebewinkel aufzuerlegen, und wobei der Roboter aufweist
- zumindest eine in Reihe mit dem Aktuator und der roboterseitigen Ladeschnittstelle angeordnete Nachgebe-Baueinheit zum Erleichtern des Lösens der roboterseitigen Ladeschnittstelle von der fahrzeugseitigen Ladeschnittstelle, wenn sich die Position des Fahrzeugs während des Ladevorgangs geändert hat, wobei die Nachgiebigkeit
- ausgelegt ist, um eine Verschiebung zwischen dem Aktuator und der roboterseitigen Ladeschnittstelle über einen Nachgebe-Hub elastisch zu absorbieren oder freizugeben und um eine Drehung des beweglichen Trägers bezüglich des Grundrahmens über einen Verschiebewinkel elastisch zu absorbieren oder freizugeben, wobei die Länge des Nachgebe-Hubs mindestens 5 Millimeter beträgt, oder wobei der
- Winkel der Nachgebe-Drehung mindestens 1 Grad beträgt
- wobei die Nachgebe-Baueinheit ausgelegt ist, die Verschiebung über den Nachgebe-Hub nach einem Überschreiten eines Schwellwerts der Last zwischen dem Aktuator und der roboterseitigen Ladeschnittstelle elastisch zu absorbieren;
- und wobei die Nachgebe-Baueinheit zwischen dem Aktuator und der roboterseitigen Ladeschnittstelle in einer bestimmten Stellung ausgerichtet ist.

2. Ladeinfrastruktur gemäß Anspruch 1, ferner mit einem elektronischen Steuersystem zum Steuern des Betriebs der Ladestation, wobei das elektronische Steuersystem einen elektronischen Steuerer aufweist, der ausgelegt ist, den Nachgebe-Hub der Nachgebe-Baueinheit zu erfassen und die Verschiebungen durch die Aktuatoren in Antwort auf das Erfassen des Nachgebe-Hubs zu steuern.

3. Ladeinfrastruktur gemäß einem der vorhergehenden Ansprüche, wobei der Roboter sechs Verschiebe-Baueinheiten aufweist, welche einen Sechsfuß-Mechanismus zwischen dem Grundrahmen und dem beweglichen Träger ausbilden, um den beweglichen Träger mit sechs Freiheitsgraden zu bewegen.

4. Ladeinfrastruktur gemäß einem der vorhergehenden Ansprüche, wobei jede Verschiebe-Baueinheit eine Nachgebe-Baueinheit aufweist, die in Reihe mit einem Aktuator zwischen der roboterseitigen Ladeschnittstelle und dem beweglichen Träger angeordnet ist.

5. Ladeinfrastruktur gemäß einem der vorhergehenden Ansprüche, wobei die Ladestation mehrere Nachgebe-Baueinheiten aufweist, die in Reihe mit einem Aktuator und der roboterseitigen Ladeschnittstelle angeordnet sind, wobei die Nachgebe-Baueinheiten wechselseitig unterschiedliche mechanische Widerstände aufweisen, um eine Verschiebung zwischen dem Aktuator und der roboterseitigen Ladeschnittstelle elastisch zu absorbieren oder freizugeben.

6. Ladeinfrastruktur gemäß einem der vorhergehenden Ansprüche, wobei die Nachgebe-Baueinheiten auf einer Seite über eine erste Kupplung mit dem Grundrahmen verbunden sind und wobei die Nachgebe-Baueinheiten auf einer entgegengesetzten Seite über eine zweite Kupplung mit dem beweglichen Träger verbunden sind, wobei der Aktuator ein in Reihe mit der Nachgebe-Baueinheit angeordneter Aktuator für geradlinige Bewegung ist.

7. Ladeinfrastruktur gemäß Anspruch 6, wobei die erste Kupplung und/oder die zweite Kupplung ein Kreuzgelenk ist.

8. Ladeinfrastruktur gemäß einem der vorhergehenden Ansprüche, wobei die Länge des Nachgebe-Hubs mindestens 50% des Verschiebungshubs beträgt.

9. Ladeinfrastruktur gemäß einem der vorhergehenden Ansprüche, wobei die roboterseitige Ladeschnittstelle und fahrzeugseitige Ladeschnittstelle mit einer Rasteinrichtung versehen sind, um die hergestellte Ladeverbindung zu verriegeln und zu entriegeln.

10. Ladeinfrastruktur gemäß Anspruch 1, wobei die Ladestation ein elektronisches Steuersystem zum Steuern des Betriebs der Ladestation aufweist, wobei das elektronische Steuersystem einen elektronischen Steuerer aufweist, der mit den Aktuatoren verbunden ist, wobei der elektronische Steuerer ausgelegt ist, Verschiebungen durch den Aktuator zu steuern, wobei das elektronische Steuersystem einen Sensor aufweist, der mit dem elektronischen Steuerer verbunden ist, um die Stellung oder Bewegung eines Aktuatoren zu bestimmen, und/oder einen Sensor, der mit dem elektronischen Steuerer verbunden ist, um den Nachgebe-Hub zu bestimmen oder um eine Kraft oder Last zu bestimmen, welche auf die Nachgebe-Baueinheit wirkt, und/oder einen Sensor zwischen dem beweglichen Träger und der roboterseitigen Ladeschnittstelle, der mit dem elektronischen Steuerer verbunden ist, um eine Kraft oder Last zu bestimmen, welche zwischen der roboterseitigen Ladeschnittstelle und dem beweglichen Träger wirkt.

11. Ladeinfrastruktur gemäß Anspruch 10, wobei der elektronische Steuerer ausgelegt ist, eine Körperberührung zwischen der roboterseitigen Ladeschnittstelle und der fahrzeugseitigen Ladeschnittstelle auf Grundlage eines Verschiebungshubs und des Nachgebe-Hubs zu bestimmen, und/oder wobei der elektronische Steuerer ausgelegt ist, eine Fehlausrichtung zwischen der roboterseitigen Ladeschnittstelle und der fahrzeugseitigen Ladeschnittstelle auf Grundlage eines Verschiebungshubs und des Nachgebe-Hubs zu bestimmen, und/oder wobei der elektronische Steuerer ausgelegt ist, die Verschiebungen durch den Aktuator zu steuern, um zumindest zum Teil die Fehlausrichtung zwischen der roboterseitigen Ladeschnittstelle und der fahrzeugseitigen Ladeschnittstelle zu korrigieren.

12. Ladeinfrastruktur gemäß einem der Ansprüche 2, 10 und 11 wobei das elektronische Steuersystem einen Bilddetektor aufweist, der mit dem elektronischen Steuerer verbunden ist, wobei der elektronische Steuerer ausgelegt ist, die räumliche Stellung der fahrzeugseitigen Ladeschnittstelle in der Ladestation zu bestimmen und die Verschiebungen durch den Aktuator entsprechend zu steuern, um die roboterseitige Ladeschnittstelle zu der fahrzeugseitigen Ladeschnittstelle hin zu bewegen, um die Ladeverbindung herzustellen, und/oder, wobei der elektronische Steuerer ausgelegt ist, die räumliche Stellung der roboterseitigen Ladeschnittstelle in der Ladestation zu bestimmen und und die Verschiebungen durch den Aktuator entsprechend zu steuern, um die die roboterseitige Ladeschnittstelle zu der fahrzeugseitigen Ladeschnittstelle hin zu bewegen, um die Ladeverbindung herzustellen.

13. Ladeinfrastruktur gemäß einem der Ansprüche 2 und 10-12, aufweisend einen Computerserver entfernt von der Ladestation, der mit dem elektronischen Steuersystem zu Zwecken der Konfiguration oder für eine Fernsteuerung des elektronischen Steuerers verbunden ist.

14. Verfahren zum Laden eines Fahrzeugs mit einer fahrzeugseitigen Ladeschnittstelle in einer Ladestation einer Ladeinfrastruktur, aufweisend den Einsatz einer Ladeinfrastruktur gemäß einem der vorhergehenden Ansprüche.

## Revendications

1. Infrastructure de recharge comprenant
- une station de recharge pour recharger un véhicule présentant une interface de recharge côté véhicule, dans laquelle la station de recharge comprend
- un robot qui porte une interface de recharge côté robot pour établir une connexion de recharge avec l'interface de recharge côté véhicule, dans laquelle le robot comprend
- un châssis,
- un support mobile portant l'interface de recharge côté robot, **caractérisé par**
- au moins trois ensembles de déplacement entre le châssis et le support mobile qui forment un mécanisme pour déplacer le support mobile avec au moins trois degrés de liberté par rapport au châssis, dans laquelle
- les ensembles de déplacement comprennent un actionneur qui est configuré pour imposer un déplacement entre le châssis et le support mobile sur une course de déplacement ou imposer une rotation du support mobile par rapport au châssis sur un angle de déplacement, et dans laquelle le robot comprend
- au moins un ensemble de conformité en série avec l'actionneur et l'interface de recharge côté robot pour faciliter le désengagement de l'interface de recharge côté robot par rapport à l'interface de recharge côté véhicule, lorsque la position du véhicule a changé pendant le processus de recharge, laquelle conformité est configurée pour absorber ou libérer de manière élastique un déplacement entre l'actionneur et l'interface de recharge côté robot sur une course de conformité et pour absorber ou libérer de manière élastique une rotation du support mobile par rapport au châssis sur un angle de déplacement, dans laquelle la longueur de la course de conformité est d'au moins 5 millimètres, ou dans laquelle l'angle de la rotation de conformité est d'au moins 1 degré,
- dans laquelle l'ensemble de conformité est configuré pour absorber de manière élastique le déplacement sur la course de conformité après dépassement d'un effort seuil entre l'actionneur et l'interface de recharge côté robot ;
- dans laquelle l'ensemble de conformité est rappelé vers une position définie entre l'actionneur et l'interface de recharge côté robot.

2. Infrastructure de recharge selon la revendication 1, comprenant en outre un système de commande électronique pour commander le fonctionnement de la station de recharge, dans laquelle le système de commande électronique comprend une unité de commande électronique configurée pour détecter la course de conformité de l'ensemble de conformité et pour commander les déplacements par les actionneurs en réponse à la détection de la course de conformité.

3. Infrastructure de recharge selon l'une quelconque des revendications précédentes, dans laquelle le robot comprend six ensembles de déplacement qui forment un mécanisme hexapode entre le châssis et le support mobile pour déplacer le support mobile avec six degrés de liberté.

4. Infrastructure de recharge selon l'une quelconque des revendications précédentes, dans laquelle chaque ensemble de déplacement comprend un ensemble de conformité en série avec un actionneur entre l'interface de recharge côté robot et le support mobile.

5. Infrastructure de recharge selon l'une quelconque des revendications précédentes, dans laquelle la station de recharge comprend de multiples ensembles de conformité en série avec un actionneur et l'interface de recharge côté robot, dans laquelle ces ensembles de conformité présentent des impédances mécaniques différentes les unes des autres qui absorbent ou libèrent de manière élastique un déplacement entre l'actionneur et l'interface de recharge côté robot.

6. Infrastructure de recharge selon l'une quelconque des revendications précédentes, dans laquelle les ensembles de déplacement sont reliés, d'un côté, au châssis via un premier raccord et dans laquelle les ensembles de déplacement sont reliés, d'un côté opposé, au support mobile via un deuxième raccord, dans laquelle l'actionneur est un actionneur à mouvement rectiligne en série avec l'ensemble de conformité.

7. Infrastructure de recharge selon la revendication 6, dans laquelle le premier raccord et/ou le deuxième raccord est un joint universel.

8. Infrastructure de recharge selon l'une quelconque des revendications précédentes, dans laquelle la longueur de la course de conformité est d'au moins 50 % de la course de déplacement.

9. Infrastructure de recharge selon l'une quelconque des revendications précédentes, dans laquelle l'interface de recharge côté robot et l'interface de recharge côté véhicule sont pourvues d'un moyen de verrouillage pour verrouiller et déverrouiller la connexion de recharge établie.

10. Infrastructure de recharge selon la revendication 1, dans laquelle la station de recharge comprend un système de commande électronique pour commander le fonctionnement de la station de recharge, dans laquelle le système de commande électronique comprend une unité de commande électronique qui est connectée aux actionneurs, dans laquelle l'unité de commande électronique est configurée pour commander des déplacements par les actionneurs, dans laquelle le système de commande électronique comprend un capteur qui est connecté à l'unité de commande électronique pour déterminer la position ou le mouvement d'un actionneur, et/ou un capteur qui est connecté à l'unité de commande électronique pour déterminer la course de conformité ou pour déterminer une force ou un effort agissant sur l'ensemble de conformité, et/ou un capteur entre le support mobile et l'interface de recharge côté robot qui est connectée à l'unité de commande électronique pour déterminer une force ou un effort agissant entre l'interface de recharge côté robot et le support mobile.

11. Infrastructure de recharge selon la revendication 10, dans laquelle l'unité de commande électronique est configurée pour déterminer un contact physique entre l'interface de recharge côté robot et l'interface de recharge côté véhicule sur la base d'une course de déplacement et de la course de conformité, et/ou dans laquelle l'unité de commande électronique est configurée pour déterminer un désalignement entre l'interface de recharge côté robot et l'interface de recharge côté véhicule sur la base d'une course de déplacement et de la course de conformité, et/ou dans laquelle l'unité de commande électronique est configurée pour commander les déplacements par les actionneurs afin de corriger au moins partiellement le désalignement entre l'interface de recharge côté robot et l'interface de recharge côté véhicule.

12. Infrastructure de recharge selon l'une quelconque des revendications 2, 10 ou 11, dans laquelle le système de commande électronique comprend un détecteur d'imagerie qui est connecté à l'unité de commande électronique, dans laquelle l'unité de commande électronique est configurée pour déterminer la position spatiale de l'interface de recharge côté véhicule dans la station de recharge et pour commander les déplacements par les actionneurs en conséquence pour déplacer l'interface de recharge côté robot vers l'interface de recharge côté véhicule pour établir la connexion de recharge, et/ou, dans laquelle l'unité de commande électronique est configurée pour déterminer la position spatiale de l'interface de recharge côté robot dans la station de recharge et pour commander les déplacements par les actionneurs en conséquence pour déplacer l'interface de recharge côté robot vers l'interface de recharge côté véhicule pour établir la connexion de recharge.

13. Infrastructure de recharge selon l'une quelconque des revendications 2 et 10-12, comprenant un serveur informatique distant de la station de recharge qui est connecté au système de commande électronique pour la configuration ou la commande à distance de l'unité de commande électronique.

14. Procédé de recharge d'un véhicule présentant une interface de recharge côté véhicule dans une station de recharge d'une infrastructure de recharge, comprenant l'utilisation d'une infrastructure de recharge selon l'une quelconque des revendications précédentes.
